# EUROPEAN PATENT SPECIFICATION

(11) **EP 0 266 884 B1**
(45) Date of publication and mention of the grant of the patent: **12.05.1993**
(21) Application number: 87308510.4
(22) Date of filing: 25.09.1987
(51) Int. Cl.: B01D 53/22, B01D 53/04

(54) **Process and apparatus for pressure swing adsorption employing gaseous diffusion barriers**
Verfahren und Einrichtung zur Druckwechseladsorption mit Verwendung von Gasdiffusionsmembranen
Procédé et dispositif pour adsorption à variation de pression utilisant des barrières de diffusion du gaz

(30) Priority: 01.10.1986 US 914097
(43) Date of publication of application: 11.05.1988
(73) Proprietor: The BOC Group, Inc., Montvale, New Jersey 07645 (US)
(72) Inventor: Jain, Ravi, North Plainfield, NJ 07060 (US); Maclean, Donald L., Annadale, NJ 08801 (US); Lerner, Steven L., Berkeley Heights, NJ 07922 (US); Lloyd-Williams, Andrew, High Bridge, NJ 08829 (US)
(74) Representative: Wickham, Michael

(56) References cited:
- US-A- 4 238 204
- US-A- 4 398 926
- PATENT ABSTRACTS OF JAPAN, vol. 7, no. 268 (C-197)[1413], 30th November 1983; & JP-A-58 151 304 (NIHON SANSO K.K.) 08-09-1983

## Description

This invention relates to a process and apparatus for the selective enrichment of a compressed gaseous mixture in a chosen component, and more particularly to an improved pressure swing adsorption process and apparatus including gaseous diffusion barriers for gas enrichment.

The use of adsorption techniques to separate a gaseous component from a gaseous stream initially was developed for the removal of carbon dioxide and water from air. The principles of gas adsorption were further refined to processes for gas enrichment of hydrogen, helium, argon, carbon monoxide, carbon dioxide, nitrous oxide, oxygen and nitrogen. Still further refinements using at least two adsorption vessels in a cycling pressurised relationship have resulted in an adsorption technique for gas enrichment commonly referred to as pressure swing adsorption (PSA).

A conventional PSA process for enriching a gas, such as nitrogen from air, employs at least two adsorption beds filled with carbon molecular sieve material, each subjected to two or more, generally four distinct processing steps in each cycle. In a first step of the cycle, one adsorption bed is pressurised with concomitant nitrogen production while the other bed is regenerated, such as by venting. The adsorption bed may also be regenerated with countercurrent flow of product quality gas (referred to as "purge"). In a second step, sometimes referred to as pressure equalisation, the adsorption beds are brought to an intermediate pressure by interconnection of the adsorption beds. In a third step of the cycle, the first adsorption bed is regenerated following the procedure used of the second bed while the second bed is put into production. The last step of the cycle is pressure equalisation between the beds. During such pressure swings, pressure conditions in the adsorption beds vary between about 0.205 MPa (15 psig) to 0.929 MPa (120 psig) in a process employing carbon molecular sieves for nitrogen production and somewhat lower pressure ranges in processes employing crystalline zeolite for producing oxygen.

The use of an oxygen separation membrane in a pressure swing adsorption process is disclosed in Japanese Patent Application JP-A- 58 - 151 304 (1983) wherein oxygen is produced by PSA techniques in adsorption columns filled with zeolite particles and wherein during the purge cycle of each adsorption column a oxygen purge gas is passed therethrough. The oxygen purge gas is obtained as a gaseous permeate stream from a gas separation membrane into which an enriched oxygen stream is introduced during a production cycle of each of the adsorption columns.

US patent specification US-A-4 238 204 discloses a selective adsorption process for the recovery of a light gas, especially hydrogen, from a feed gas mixture by utilising a membrane permeator unit selectively permeable to said light gas to recover a more concentrated light gas from a stream comprising said light gas used to regenerate a selective adsorber unit, and recycling the concentrated light gas to the selective adsorber unit, either blended with the feed gas mixture or as purging gas for recovery of an added proportion of highly purified light gas product.

Neither of these known processes is suitable for use when the product is a less readily adsorbed component of the gas mixture and diffuses through the membrane less readily than the other component(s). The invention, however, provides a process and apparatus which employ gas diffusion to improve an adsorption - desorption, e.g. PSA, method when the product component has these characteristics.

According to the invention there is provided a process for the selective enrichment of a compressed gas mixture in a chosen component using at least two beds of adsorption material, wherein cycles are performed alternately on each bed comprising an adsorption step during which a feed gas mixture under pressure is passed through the bed to product a product gaseous stream enriched in said chosen component; and a desorption step during which a gas stream is withdrawn from the bed and introduced into a gas diffusion zone thereby forming a permeate stream and a non-permeate stream, characterised in that the gas mixture is air and the chosen component is nitrogen and the desorption step comprises two stages, a high pressure blow-down stage and a relatively low pressure vent stage and in that only during the blow-down stage when the pressure of the gas stream is higher than 0.205 MPa (15 psig) or when the concentration of the chosen component is greater than 79% in the non-permeate stream is the gas stream introduced into the gas diffusion zone; the non-permeate stream enriched in the chosen component being returned to the adsorption bed for bed pressurisation prior to the introduction of the feed gas mixture thereto.

The invention also provides an apparatus according to claim 5 for carrying out the process defined above.

The process and apparatus according to the present invention will now be described by way of example with reference to the accompanying drawings, in which:-
Figure 1 is a schematic flow diagram of a preferred embodiment of the present invention;
Figure 2 is a pressure profile of the adsorbent vessels for a complete cycle of a somewhat standard PSA process;
Figure 3 is a graph showing a typical blowdown and vent flow rate as a function of time for nitrogen production according to one embodiment of the present invention;
Figure 4 is a graph showing a typical blowdown and vent pressure as function of time for nitrogen production according to the embodiment of Figure 3 of the present invention;
Figure 5 is a graph showing a typical oxygen concentration as a function of time for nitrogen production according to the embodiment of Figure 3 of the present invention;
Figure 6 is a graph showing a typical mole fraction of nitrogen in the non-permeate stream as a function of time and stage cut according to the embodiment of Figure 3 of the present invention; and
Figure 7 is a graph showing power consumption per unit product as a function of stage cut according to the embodiment of Figure 3 of the present invention.

To facilitate an understanding of the present invention; certain valving, piping and instrumentation assemblies are not illustrated in the drawings. However, it will be understood that such additional valving, piping and instrumentation assemblies are provided consistent with accepted practices in the art. The present invention will be described in the context of nitrogen enrichment of air using an adsorbent bed of carbon molecular sieves, although it will be understood by one skilled in the art that the process and apparatus of the present invention are applicable to other gas enrichment processes using pressure swing adsorption.

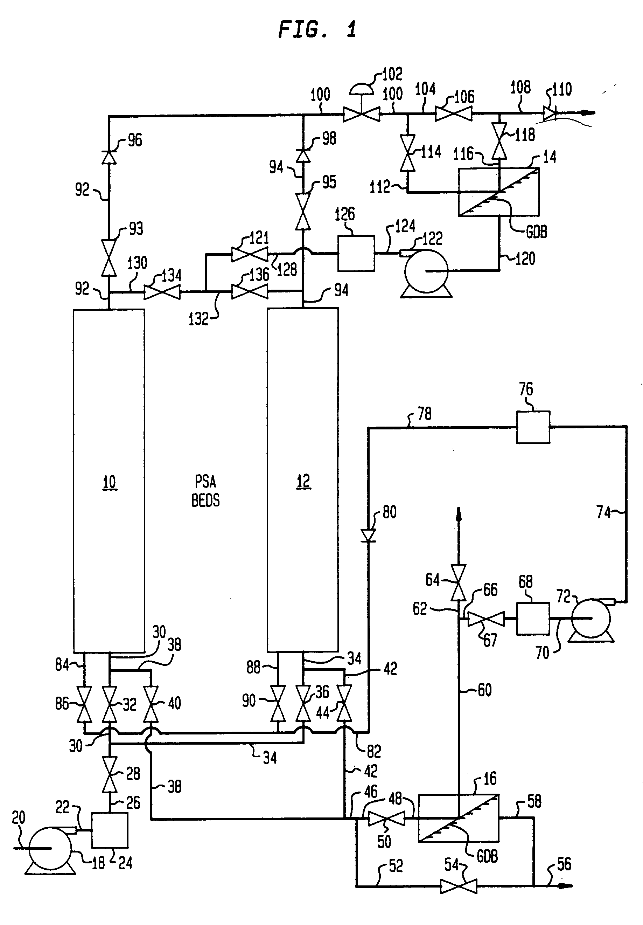

Referring now to Figure 1, there is illustrated a schematic flow diagram of the process and apparatus of the present invention including vessels 10 and 12, each containing a bed of adsorption material and upper and lower gas diffusion vessels 14 and 16. The vessels 10 and 12 are each filled with an appropriate adsorption material, such as the aforementioned carbon molecular sieves. The upper and lower gas diffusion vessels 14 and 16 each define a gas permeation zone and each is provided with suitable gaseous diffusion barriers (GDB), as more fully explained hereinafter.

The apparatus includes a feed compressor 18 having an inlet conduit 20 on the suction side thereof and an outlet 22 in fluid communication with a surge tank 24. The surge tank 24 is provided with a conduit 26 under the control of valve 28 connected to a conduit 30 under the control of valve 32 with the lower (as shown) portion of the vessel 10 and to a conduit 34 under the control of valve 36 with the lower portion of the vessel 12.

The conduits 30 and 34 connected respectively to the lower portion of the vessels 10 and 12 are connected by conduit 38 under the control of the valve 40 and conduit 42 under the control of valve 44, respectively to a conduit 46. The conduit 46 is connected by a conduit 48 under the control of valve 50 with a lower (as shown) gas diffusion vessel 16 and by a conduit 52 under the control of valve 54 to a vent conduit 56.

The lower gas diffusion vessel 16 on the permeate side is provided with a conduit 58 connected to the vent conduit 56 and on the non-permeate side is provided with a conduit 60. The conduit 60 is connected to a conduit 62 under the control of valve 64 and to a conduit 66 under the control of valve 67 to a holding tank 68. The holding tank 68 is provided with a conduit 70 connected to the suction side of a compressor 72 with the discharge side thereof being connected by a conduit 74 to a surge tank 76. The compressor 72 and related surge tank 76 are optionally provided to permit process flexibility. The holding tank 76 is provided with an outlet conduit 78 including a one-way valve 80 connected to a conduit 82. The conduit 82 is connected to the lower portion of adsorption vessel 10 by a conduit 84 under the control of valve 86 and to the lower portion of adsorption vessel 12 by a conduit 88 under the control of valve 90, as more fully described hereinafter.

The vessels 10 and 12 are provided with upper (as shown) conduits 92 and 94, respectively, under the control of valves 93 and 95 and including one-way check valves 96 and 98, respectively, connected to a conduit 100. The conduit 100 under the control of valve 102 is connected to a conduit 104 under the control of valve 106 with a product conduit 108 including one-way valve 110. The conduit 100 is connected by a conduit 112 under the control of valve 114 to the upper (as shown) gas diffusion vessel 14. The upper gas diffusion vessel 14 is provided on the non-permeate side with a conduit 116 under the control of valve 118 connected to the product conduit 108, and is provided on the permeate side with a conduit 120 in fluid communication with the suction side of a compressor 122. The discharge side of the compressor 122 is connected by a conduit 124 to a holding tank 126 having a conduit 128 under the control of valve 121 and connected to conduits 130 and 132 under the control respectively of valves 134 and 136 with upper conduits 92 and 94, respectively, of the adsorption vessels 10 and 12. Generally, the compressor 122 and associated holding or surge tank 126 is optionally provided for process flexibility.

The upper and lower gas diffusion vessels 14 and 16 are commercially available vessels, such as from UOP Fluid Systems (a Division of Allied-Signal), and provided with a suitable gaseous diffusion barrier which uses a silicone-rubber membrane, or from Monsanto Chemical Company which uses a polysulfone membrane. The membrane used in the vessels permits gaseous molecular oxygen to pass through the membranes faster than gaseous molecular nitrogen.

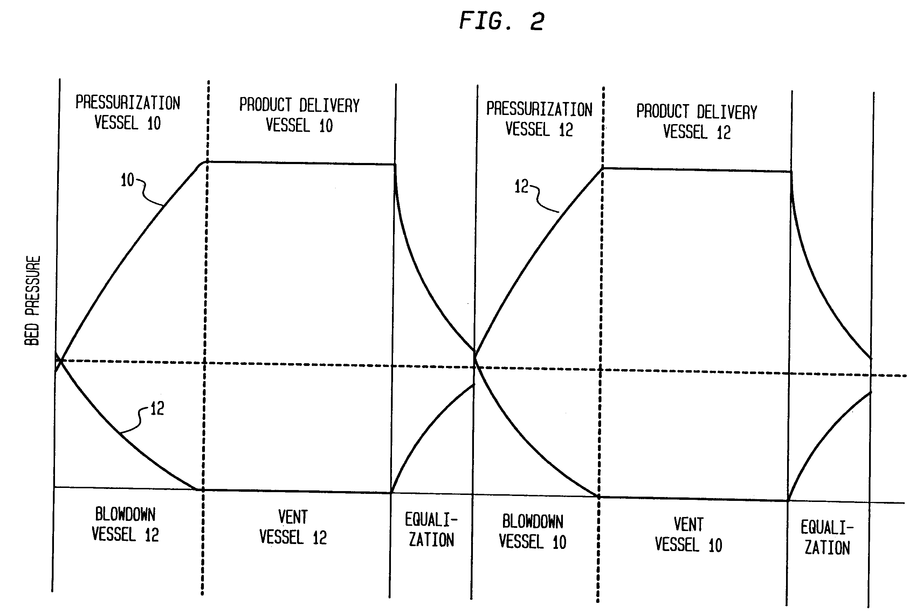

In use, the pressurised gas stream withdrawn from an adsorption column during the blowdown stage of desorption (regeneration) following pressure equalisation (see Figure 2) is introduced into the lower gaseous diffusion vessel 16 wherein there is formed a non-permeate gas stream relatively depleted in the adsorbate (or oxygen) and at an elevated pressure and a permeate gaseous stream of a higher lever of the adsorbate which is vented. The non-permeate gas stream at an elevated pressure is returned to an adsorption bed in a vessel 10, 12 for bed pressurisation prior to the introduction of a feed gas mixture from compressor 18 thereto.

Furthermore, a portion of the gas enriched product stream, as breakthrough is approached and product purity level falls off, is introduced into the upper gaseous diffusion vessel 14 to form a non-permeate stream, i.e. a gaseous stream of a purity consistent with product design criteria, and a permeate stream to be used for purge and/or backfill, as more fully discussed hereinafter. The use of either or both the upper and lower gaseous diffusion vessels or zones may be efficaciously integrated into existing PSA plants.

Let it be assumed that the apparatus is in operation in a PSA process for producing high purity nitrogen, e.g. 99.9% nitrogen at a pressure of from 0.515 to 1.135 MPa (60 to 150 psig), wherein the vessel 10 has been desorbed and is ready for production following pressurisation, whereas the adsorption vessel 12 requires desorption (regeneration), and prior to that pressure equalisation or balancing has been effected between the vessels 10 and 12. In describing the operation of the following steps, only the valves opened during each step are mentioned, it being understood that the remaining valves are closed. In this condition, valves 28, 32, 44, 50, 67, 93, 102 and 106 are opened.

For pressurisation of vessel 10 and for production, air at ambient temperature in inlet conduit 20 is compressed in compressor 18 to a pressure of from 0.549 to 1.17 MPa (65 to 155 psig) and passed by conduit 22 to the surge tank 24 and thence by conduits 26 and 30 to the lower portion of the vessel 10. The compressed air is introduced at a pressure of about 0.48 to 1.17 PMa (55 to 155 psig) into adsorption vessel 10 wherein oxygen is selectively adsorbed therein to form a nitrogen-enriched product gaseous stream withdrawn from adsorption vessel 10 by upper conduit 92 and passed at a pressure of from 0.515 to 1.135 MPa (60 to 150 psig) by conduits 100, 104 and 108 to product storage or user equipment (not shown).

The flow of compressed air to vessel 10 is continued until a point is reached where the level of oxygen in the nitrogen product gaseous stream reaches a predetermined threshold value unacceptable for product usage. For example, the average oxygen content of the nitrogen-enriched product stream may be 1000 ppmv O₂ whereupon a predetermined threshold value may be 1200 ppmv O₂.

At the point of reaching such a predetermined threshold value, the nitrogen-enriched gaseous stream (or "tail-end" product) in conduit 100 is purified in the upper gaseous diffusion vessel 14 by closing valve 106 to provide a non-permeate gas stream of acceptable purity withdrawn by conduit 116 and passed to product conduit 108. The permeate stream (the stream permeating the diffusion membrane), slightly enriched in oxygen and at a lower pressure level, is passed via conduit 120 under the control of valves 121 and 136 at a pressure level of from 0.205 to 0.446 PMa (15 to 50 psig) to the vessel 12 as a purge gas or as backfill for the adsorption bed undergoing regeneration. In this condition, valves 28, 32, 44, 54, 93, 102, 114, 118, 121 and 136 are open. The compressor 122 and associated holding tank 126 are optionally provided as hereinabove discussed. The flow of gaseous product in conduit 100, having a level of impurity higher than threshold value, is continued to the upper gas diffusion vessel 14 until further increase in the concentration of oxygen warrants shutdown of adsorption vessel 10 and the regeneration thereof.

At the initiation of pressurisation of the adsorption vessel 10 prior to production of an enriched gaseous stream the adsorption vessel 12 has undergone pressure equalisation or pressure balancing and is concomitantly prepared for a desorption step. During this condition, valves, 28, 32, 44, 50 and 67 are opened to allow pressurisation of adsorption vessel 10 and during the blowdown stage to permit a flow of gas from the adsorption vessel 12 through the conduits 34, 42, 46 and 48 into the gaseous diffusion vessel 16 which includes a suitable gaseous diffusion barrier (GDB). In the gaseous diffusion vessel 16, oxygen readily passes through the gas-permeable membrane (GM). An oxygen-enriched gaseous stream (permeate) is withdrawn from the gas diffusion vessel 16 by conduit 58 and passed via conduit 56 to vent. The non-permeate gaseous stream formed in the gaseous diffusion vessel 16 is available at a pressure of from at least about 0.205 MPa (15 psig) to a pressure range of from 0.205 to 0.618 MPa (15 to 75 psig), as more fully discussed hereinafter. Upon reaching a predetermined concentration level of N₂, e.g. 79% or alternatively determined by a pressure level of from 0.205 to 0.308 MPa (15 to 30 psig) in the non-permeate stream, generally as determined by cycle time versus gas analysis, the valve 50 in conduit 48 is closed and valve 54 in conduit 52 is opened to permit the gas stream in conduit 46 to be passed to atmosphere via conduit 56.

As hereinabove discussed, the permeate stream and non-permeate gaseous stream formed in the upper and lower gas diffusion vessels 14 and 16 may be used in diverse ways to improve the process of gas enrichment utilising pressure swing adsorption techniques. With regard to the use of the lower gaseous diffusion vessel 16, the non-permeate stream in conduit 60 is used for bed repressurisation via conduit 62 prior to the introduction of the feed gas mixture thereto. This repressurisation is generally effected concurrently with the vent stage of the desorption step but before pressure equalisation. Depending on the cycling times of such regenerated beds, the non-permeate stream may be passed to a holding tank 68 prior to introduction into such regenerated beds during repressurisation.

As illustrated in Figure 2 in a normal PSA operation, at the end of product delivery from adsorption vessel 10, the adsorption vessel 12 will have undergone a desorption step including a blowdown stage and a vent stage at which time the adsorption vessel 12 is readied for production and the adsorption vessel 10 is readied for regeneration. At such time, valves 32, 36, 134 and 136 are opened to effect pressure equalisation between the adsorption vessels 10 and 12.

The step of pressure equalisation is effected for a time sufficient for such purpose, generally from 2 to 20 seconds depending on the volume and type of the bed of adsorption material in the vessels 10 and 12. The step of pressure equalisation for the PSA process of this invention is the same as in a normal PSA process; however, it is effected after processing the blowdown from the adsorption vessel undergoing regeneration with the lower gaseous diffusion vessel 16 and after processing tail-end product from the in production adsorption vessel with the upper gaseous diffusion vessel 14.

At a preselected time in the operational cycle, adsorption vessel 12 is placed in a nitrogen production mode and the adsorption vessel 10 into a regeneration mode. In this condition, valves 28, 36, 40, 50, 67, 95, 102 and 106 are opened. Accordingly, compressed air in conduit 22 is now passed through conduits 26 and 34 to the adsorption vessel 12 to form a nitrogen-enriched product gaseous stream which is withdrawn from the adsorption vessel 12 through conduit 94 and passed by conduits 100, 104 and 108 to product storage. Regeneration of the bed of adsorbent material in adsorption vessel 10, i.e. blowdown and venting are effected in like manner to that of the bed of adsorption material in adsorption vessel 12. During the blowdown stage of regeneration, a gaseous stream is withdrawn from adsorption vessel 10 by conduit 38 and is passed through conduits 46 and 48 under the control of valve 50 to lower diffusion vessel 16 as hereinabove described.

At the completion of regeneration of the bed of adsorption material in the adsorption vessel 10 and the completion of product delivery from the adsorption vessel 12 including the purification of the tail-end product in the upper gaseous diffusion vessel 14, the valves 32, 36, 134 and 136 are opened to initiate and permit the step of pressure equalisation.

In accordance with the present invention as hereinabove described, the gaseous stream withdrawn from an adsorption vessel 10, 12 in the conduit 46 at the inception of the blowdown stage is at an elevated pressure of from 0.377 to 0.618 MPa (40 to 75 psig) and is passed by conduit 48 under the control of valve 50 to the gaseous diffusion vessel 16, generally to a point where the pressure in the conduit 46 reaches about 0.205 MPa (15 psig). Upon reaching such pressure, the gaseous stream is discharged to atmosphere by closing valve 50 and opening valve 54 to permit gaseous flow through conduit 52.

### EXAMPLES

The following examples are illustrative of the process of the present invention, and it is to be understood that the scope of the invention is not to be limited thereby.

### Example I

The PSA blowdown stage, after pressure equalisation between beds, is passed through the lower diffusion vessel (polysulfone membrane). Referring to Figure 1, the nitrogen-enriched non-permeate stream from the lower diffusion cell is sent to the holding tank 68 and is then compressed to the feed pressure in compressor 72. The compressed gas in the holding tank 76 is introduced as feed to the adsorption vessels 10 or 12 during part of the production cycle.

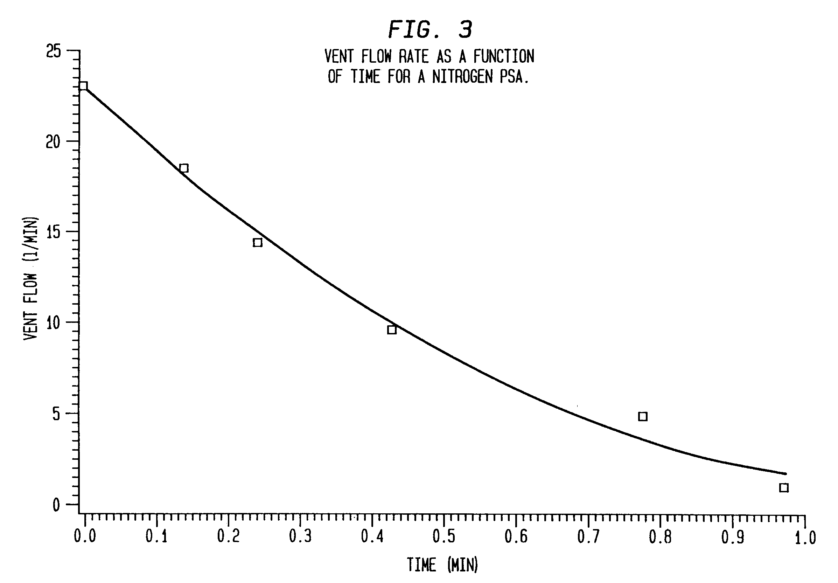

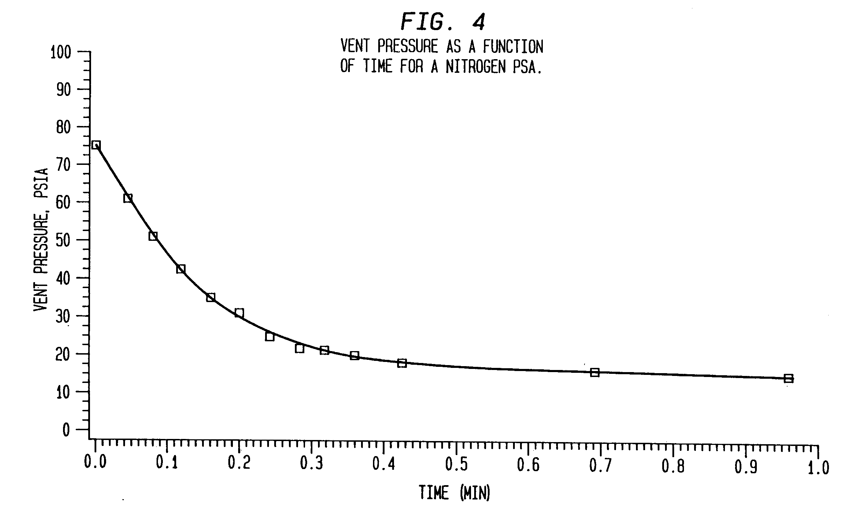

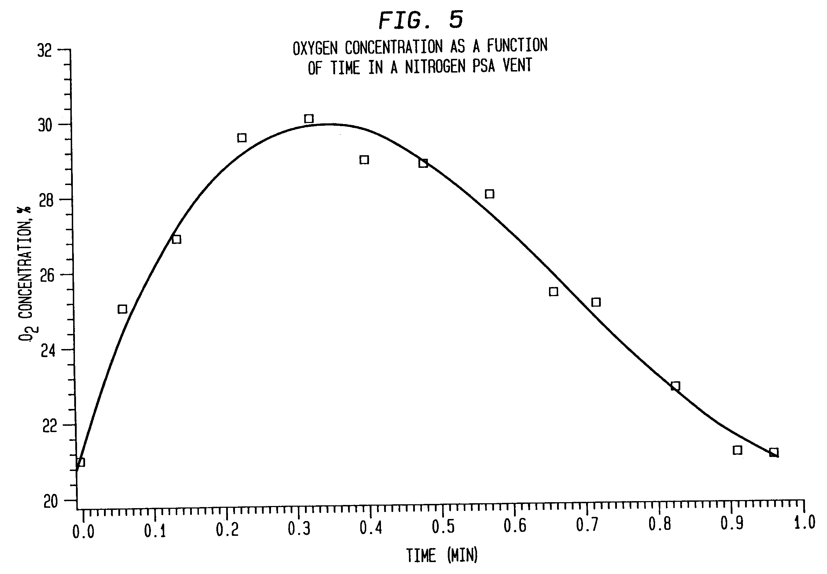

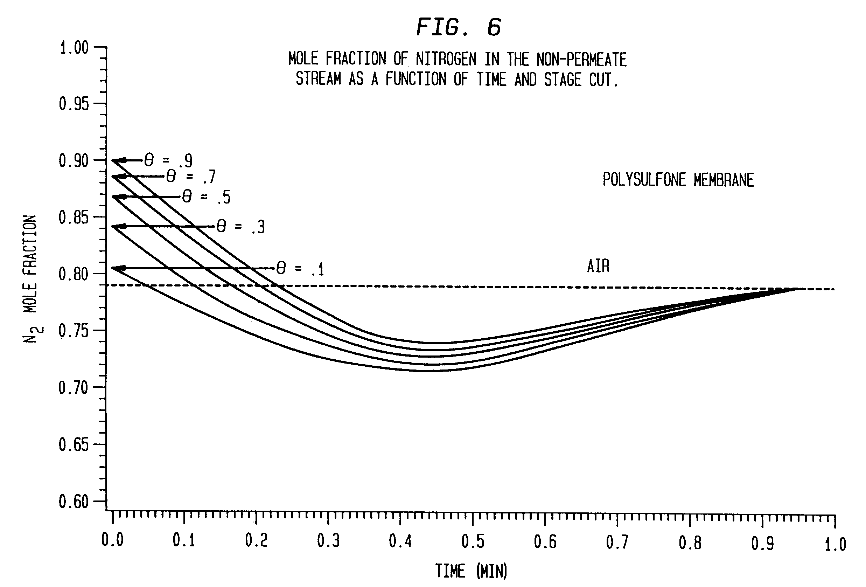

Figures 3 to 5 illustrate blowdown flow rate, blowdown pressure, and oxygen concentration as a function of time for a nitrogen PSA employing BF (Bergbau-Forschung, West Germany) carbon molecular sieve and operating on a 2 min. full cycle. The operating pressure is 0.929 MPa (120 psig) and the profiles shown in Figures 3 to 5 are for the bed undergoing regeneration by blowdown and venting. The nitrogen concentration profiles for polysulfone membrane, as a function of stage cut (fraction of feed permeating the membrane), are shown in Figure 6. The energy required to compress the fraction of non-permeate stream with a nitrogen concentration above 79% to feed pressure 0.929 MPa (120 psig) was calculated as a function of stage cut.

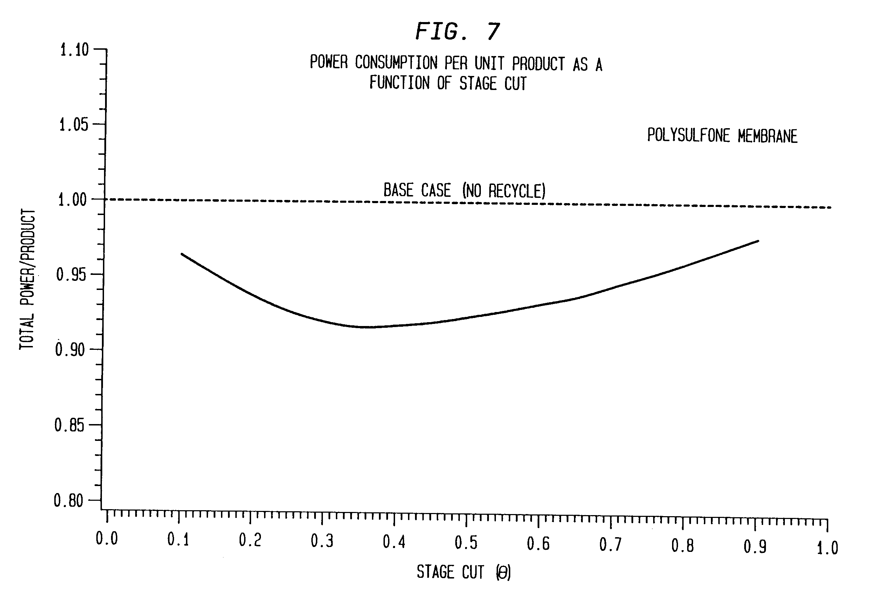

Significant energy savings are realised since the non-permeate stream requires relatively smaller compression to be raised to feed pressure because of it being at a pressure higher than atmospheric, while fresh feed has to be compressed to operating pressure starting at atmospheric pressure. Figure 7 shows relative power requirements to produce a unit amount of product in the absence of diffusion vessel, versus a diffusion vessel containing polysulfone membrane. The optimum performance is obtained for a stage cut of about 50% and for this case about 8.5% energy savings are possible for polysulfone membranes and realised by use of a lower gaseous diffusion vessel to provide a portion of the gaseous feed.

### Example II

The following example illustrates the cycling time for a PSA process using a non-permeate gas stream formed in the gaseous diffusion vessel 16 to pressurise an adsorption bed prior to pressure equalisation (valves - Figure 1):

| Step | Vessel 10 | Vessel 12 | Valves Open | Typical Times (sec.) |
|---|---|---|---|---|
| 1 | Pressurise with fresh feed | Blowdown through lower diffusion cell | 28, 32, 44, 50, 67 | 10 |
| 2 | Produce N₂ product | Blowdown through lower diffusion cell | 28, 32, 44, 50, 67, 93, 102, 106 | 30 |
| 3 | Produce N₂ product | Vent directly to atmosphere | 28, 32, 44, 54, 93, 102, 106 | 70 |
| 4 | Produce N₂ product | Pressurise with gas from lower diffusion cell | 28, 32, 90, 93, 102, 106 | 5 |
| 5 | Pressure equalisation with Vessel 12 | Pressure equalisation with Vessel 10 | 32, 36, 134, 13 | 5 |
| 6 | Blowdown through lower diffusion cell | Pressurise with fresh feed | 28, 36, 40, 50, 67 | 10 |
| 7 | Blowdown through lower diffusion cell | Produce N₂ product | 28, 36, 40, 50, 67, 95, 102, 106 | 30 |
| 8 | Vent directly to atmosphere | Produce N₂ product | 28, 36, 40, 50, 95, 102, 106 | 70 |
| 9 | Pressurise with gas from lower diffusion cell | Produce N₂ product | 28, 36, 86, 95, 102, 106 | 5 |
| 10 | Pressure equalisation with Vessel 12 | Pressure equalisation with Vessel 12 | 32, 36, 134, 136 | 5 |
| 4 min./cycle | | | | |

### Example III

The following example illustrates the cycling time for a nitrogen process in which a permeate stream from the gaseous diffusion vessel 14 is used to purge one of the adsorption beds (valves - Figure 1):

| Step | Vessel 10 | Vessel 12 | Valves Open | Typical Times (sec.) |
|---|---|---|---|---|
| 1 | Pressurise with fresh feed | Vent directly to atmosphere | 28, 32, 44, 54 | 10 |
| 2 | Produce N₂ product | Vent directly to atmosphere | 28, 32, 44, 54, 93, 102, 106 | 100 |
| 3 | Purify product with upper diffusion cell, provide purge for Vessel 12 | Purge Vessel 12 with permeate from upper diffusion cell | 28, 32, 44, 54, 93, 102, 114, 116, 121, 136 | 35 |
| 4 | Pressure equalisation with Vessel 12 | Pressure equalisation with Vessel 10 | 32, 36, 134, 136 | 5 |
| 5 | Vent directly to atmosphere | Pressurise with fresh feed | 28, 36, 40, 54 | 10 |
| 6 | Vent directly to atmosphere | Produce N₂ product | 28, 36, 40, 54, 95, 102, 106 | 100 |
| 7 | Purge with permeate from upper diffusion cell | Purify product with upper diffusion cell, provide purge for Vessel 10 | 28, 36, 40, 54, 95, 102, 114, 116, 121, 134 | 35 |
| 8 | Pressure equalisation with Vessel 12 | Pressure equalisation with Vessel 10 | 32, 36, 134, 136 | 5 |
| 5 min./cycle | | | | |

### Example IV

The following example illustrates the cycling time for a PSA process using the combined processing steps as disclosed in Examples II and III (valves - Figure 1):

| Step | Vessel 10 | Vessel 12 | Vessel Open | Typical Times (sec.) |
|---|---|---|---|---|
| 1 | Pressurise with fresh feed | Blowdown through lower diffusion cell | 28, 32, 44, 50, 67 | 10 |
| 2 | Produce N₂ product | Blowdown through lower diffusion cell | 28, 32, 44, 50, 67, 93, 102, 106 | 30 |
| 3 | Produce N₂ product | Vent directly to atmosphere | 28, 32, 44, 54, 93, 102, 106 | 70 |
| 4 | Purify product with upper diffusion cell, provide purge for Vessel 12 | Purge Vessel 12 with permeate from upper diffusion cell | 28, 32, 44, 54, 93, 102, 114, 116, 121, 136 | 30 |
| 5 | | Pressurise with gas from lower diffusion cell | 90 | 5 |
| 6 | Pressure equalisation with Vessel 12 | Pressure equalisation with Vessel 10 | 32, 36, 134, 136 | 5 |
| 7 | Blowdown through lower diffusion cell | Pressurise with fresh feed | 28, 36, 40, 50, 67 | 10 |
| 8 | Blowdown through lower diffusion cell | Produce N₂ product | 28, 36, 40, 50, 67, 95, 102, 106 | 30 |
| 9 | Vent directly to atmosphere | Produce N₂ product | 28, 36, 40, 54, 95, 102, 106 | 70 |
| 10 | Purge with permeate from upper diffusion cell | Purify product with upper diffusion cell, provide purge for Vessel 10 | 28, 36, 40, 54, 95, 102, 114, 116, 121, 134 | 30 |
| 11 | Pressurise with gas from lower diffusion cell | | 86 | 5 |
| 12 | Pressure equalisation with Vessel 12 | Pressure equalisation with Vessel 10 | 32, 36, 134, 136 | 5 |
| 5 min./cycle | | | | |

By using the process of the present invention as directed to the use of gaseous diffusion vessels the result is a reduction in energy requirements of from 5 to 15% per unit of product depending on the type of membrane material used in the diffusion vessels.

The present invention has been described in the context of PSA processing technology in the production of a nitrogen-enriched product stream; however, it will be understood by one of ordinary skill in that art that the present invention is applicable to gas enrichment technology, per se, using pressure swing adsorption techniques.

## Claims

1. A process for the selective enrichment of a compressed gas mixture in a chosen component using at least two beds (10, 12) of adsorption material, wherein cycles are performed alternately on each bed comprising an adsorption step during which a feed gas mixture under pressure is passed through the bed to produce a product gaseous stream enriched in said chosen component; and a desorption step during which a gas stream is withdrawn from the bed and introduced into a gas diffusion zone (16) thereby forming a permeate stream and a non-permeate stream, characterised in that the gas mixture is air and the chosen component is nitrogen and the desorption step comprises two stages, a high pressure blow-down stage and a relatively low pressure vent stage and in that only during the blow-down stage when the pressure of the gas stream is higher than 0.205 MPa (15 psig) or when the concentration of the chosen component is greater than 79% in the non-permeate stream is the gas stream introduced into the gas diffusion zone (16); the non-permeate stream enriched in the chosen component being returned to the adsorption bed for bed pressurisation prior to the introduction of the feed gas mixture thereto.

2. A process as claimed in claim 1, characterised in that upon reaching a predetermined threshold concentration of another component of said gaseous mixture in said product gaseous stream, said product gaseous stream is introduced into a further diffusion zone (14) and a non-permeate gas stream enriched in said chosen component is recovered from the further diffusion zone (14) as product.

3. A process as claimed in claim 2, characterised in that a permeate gaseous stream is recovered from said further diffusion zone (14).

4. A process as claimed in claim 3, characterised in that said permeate stream from the further diffusion zone (14) is introduced into an adsorption bed (10, 12) after venting desorbed gas from said bed and prior to pressure equalisation of said adsorption bed with another adsorption bed.

5. Apparatus for carrying out the process of one of claims 1 to 4, comprising a compressor (18) for compressing the feed gas mixture, means for the passage of the compressed feed gas mixture alternately to one or other of adsorption vessels (10, 12) each containing a bed of adsorption material, a gaseous diffusion vessel (16) and means (38, 40; 42, 44; 48, 50) for placing the gaseous diffusion vessel (16) in fluid communication with adsorption vessels (10, 12) to receive in use the gas stream withdrawn from a respective adsorption vessel during desorption of said bed of adsorption material and conduit means for returning the non-permeate stream enriched in the chosen component from the gaseous diffusion vessel (16) to an adsorption vessel (10, 12).

6. Apparatus as claimed in claim 5, characterised in that it includes a further gaseous diffusion cell (14) in fluid communication with said adsorption vessels (10, 12) to receive a gaseous stream enriched in said chosen component from a respective adsorption vessel during adsorption of other components in said gaseous mixture by the bed of adsorption material in that vessel to form as product a non-permeate gas stream enriched in said chosen component.

7. Apparatus as claimed in claim 6, characterised in that it further includes conduit means for passing a permeate stream from said further gaseous diffusion cell (14) to the adsorption vessels (10, 12).

## Patentansprüche

1. Verfahren zum wahlweisen Anreichern eines komprimierten Gasgemischs mit einer ausgewählten Komponente unter Benutzung von mindestens zwei Schichten (10, 12) von Adsorptions-Material, wobei abwechselnd in jeder Schicht Zyklen durchgeführt werden, die einen Adsorptions-Schritt umfassen, in welchem ein Speisegasgemisch unter Druck durch die Schicht geleitet wird, um einen mit der gewählten Komponente angereicherten Produktgasstrom zu erzeugen; und einen Desorptions-Schritt, in dem ein Gasstrom von der Schicht abgezogen und in eine Gasdiffusions-Zone (16) eingeleitet wird, wodurch ein Permeat-Strom und ein Nichtpermeat-Strom ausgebildet wird, dadurch gekennzeichnet, daß das Gasgemisch Luft und die gewählte Komponente Stickstoff ist und der Desorptionsschritt zwei Stufen umfaßt, eine Hochdruck-Abblasstufe und eine bei relativ niedrigem Druck erfolgende Belüftungsstufe, und daß nur während der Abblasstufe, wenn der Druck des Gasstromes höher als 0,205 MPa (15 psig) ist oder wenn die Konzentration der gewählten Komponente größer als 79% in dem Nichtpermeat-Strom beträgt, der in die Gasdiffusions-Zone (16) eingeführte Gasstrom ist, der mit der gewählten Komponente angereicherte Nichtpermeat-Strom zu der Adsorptions-Schicht zurückgeführt wird, um die Schicht vor dem Einleiten des Speisegasgemischs in diese unter Druck zu setzen.

2. Verfahren nach Anspruch 1, dadurch gekennzeichnet, daß nach Erreichen einer vorbestimmten Schwellenkonzentration einer anderen Komponente des Gasgemisches in dem Produktgasstrom der Produktgasstrom in eine weitere Diffusionszone (14) eingeführt wrid und ein mit der gewählten Komponente angereicherter Nichtpermeat-Gasstrom von der weiteren Gasdiffusions-Zone (14) als Produkt wiedergewonnen wird.

3. Verfahren nach Anspruch 2, dadurch gekennzeichnet, daß ein Permeat-Gasstrom von der weiteren Diffusionszone (14) wiedergewonnen wird.

4. Verfahren nach Anspruch 3, dadurch gekennzeichnet, daß der Permeat-Strom von der weiteren Diffusionszone (14) in eine Adsorptions-Schicht (10, 12) eingeführt wird nach dem Ablüften von desorbiertem Gas von der Schicht und vor der Druckangleichung dieser Adsorptions-Schicht mit einer anderen Adsorptions-Schicht.

5. Vorrichtung zum Ausführen des Verfahrens nach einem der Ansprüche 1 bis 4, die umfaßt einen Kompressor (18) zum Komprimieren des Speisegasgemischs, Mittel für das Durchleiten des komprimierten Speisegasgemisches abwechselnd zum einen oder anderen Adsorptions-Gefäß (10, 12), von denen jedes eine Schicht aus Adsorptions-Material enthält, ein Gasdiffusions-Gefäß (16) und Mittel (38, 40; 42, 44; 48, 50), um das Gasdiffusions-Gefäß (16) in Fluidverbindung mit Adsorptions-Gefäßen (10, 12) zu setzen, um im Gebrauch den von jeweils einem Adsorptions-Gefäß während der Desorption der jeweiligen Schicht vom Adsorptions-Material abgezogenen Gasstrom aufzunehmen, und Leitungsmittel zum Rückführen des mit der gewählten Komponente angereicherten Nichtpermeat-Stroms von dem Gasdiffusions-Gefäß (16) zu einem Adsorptions-Gefäß (10, 12).

6. Vorrichtung nach Anspruch 5, dadurch gekennzeichnet, daß sie eine weitere Gasdiffusions-Zelle (14) in Fluidverbindung mit den Adsorptions-Gefäßen (10, 12) enthält, um im Gebrauch einen mit der gewählten Komponente angereicherten Gasstrom von einem jeweiligene Adsorptions-Gefäß zu empfangen während der Adsorption anderer Komponenten in dem Gasgemisch durch die Adsorptions-Materialschicht in diesem Gefäß, um als Produkt einen mit der gewählten Komponente angereicherten Nichtpermeat-Gasstrom zu bilden.

7. Vorrichtung nach Anspruch 6, dadurch gekennzeichnet, daß sie weiter enthält Leitungsmittel zum Durchleiten eines Permeat-Stromes von der weiteren Gasdiffusions-Zelle (14) zu den Adsorptions-Gefäßen (10, 12).

## Revendications

1. Procédé pour l'enrichissement sélectif d'un mélange gazeux comprimé avec un composant choisi, utilisant au moins deux lits (10, 12) de matériau adsorbant, dans lequel sont réalisés alternativement sur chaque lit des cycles comprenant une étape d'adsorption pendant laquelle un mélange de charge gazeux sous pression traverse le lit pour produire un flux gazeux de produit final enrichi dudit composant choisi; et une étape de désorption pendant laquelle un flux gazeux est extrait du lit et introduit dans une zone (16) de diffusion gazeuse, formant ainsi un flux de perméat et un flux de produit non perméable, ***caractérisé en ce que*** le mélange gazeux est l'air et le composant choisi est l'azote et en ce que l'étape de désorption comprend deux phases, une phase haute pression de détente ("blowdown") et une phase de décharge sous pression relativement faible, et en ce que c'est seulement pendant la phase de détente lorsque la pression du flux gazeux est supérieure à 0,205 MPa (15 psig) ou lorsque la concentration du composant choisi est supérieure à 79 % dans le flux de produit non perméable que le flux gazeux est introduit dans la zone (16) de diffusion gazeuse; le flux de produit non perméable enrichi avec le composant choisi étant renvoyé vers le lit adsorbant pour la pressurisation du lit avant l'introduction du mélange de charge gazeux dans celui-ci.

2. Procédé selon la Revendication 1, ***caractérisé en ce que*** lorsqu'on atteint une valeur de seuil prédéterminée de la concentration en un autre composant dudit mélange gazeux dans ledit flux gazeux de produit, ledit flux gazeux de produit est introduit dans une autre zone (14) de diffusion et un flux gazeux non perméable enrichi avec ledit composant choisi est recueilli au niveau de l'autre zone (14) de diffusion comme produit final.

3. Procédé selon la Revendication 2, ***caractérisé en ce qu'***un flux gazeux de perméat est recueilli au niveau de ladite autre zone (14) de diffusion.

4. Procédé selon la Revendication 3, ***caractérisé en ce que*** ledit flux gazeux de perméat provenant de l'autre zone (14) de diffusion est introduit dans un lit adsorbant (10, 12) après décharge du gaz désorbé dudit lit et avant égalisation de pression dudit lit adsorbant avec un autre lit adsorbant.

5. Dispositif pour mener à bien le procédé de l'une des Revendications 1 à 4, comprenant un compresseur (18) pour comprimer le mélange de charge gazeux, des moyens pour le passage du mélange de charge gazeux comprimé alternativement vers l'une ou l'autre des cuves (10, 12) d'adsorption contenant chacune un lit de matériau adsorbant, une cuve (16) de diffusion gazeuse et des moyens (38, 40 ; 42, 44 ; 48, 50) pour placer la cuve (16) de diffusion gazeuse en communication fluidique avec les cuves d'adsorption (10, 12) afin de recevoir lors de l'utilisation le flux gazeux évacué d'une cuve d'adsorption correspondante pendant la désorption dudit lit de matériau adsorbant et des moyens de canalisation pour renvoyer le flux non perméable enrichi avec le composant choisi, ceci de la cuve (16) de diffusion gazeuse vers une cuve (10, 12) d'adsorption.

6. Dispositif selon la Revendication 5, ***caractérisé en ce qu'***il comprend une autre cellule (14) de diffusion gazeuse en communication fluidique avec lesdites cuves (10, 12) d'adsorption afin de recevoir un flux gazeux enrichi avec le composant choisi, flux en provenance d'une cuve d'adsorption correspondante pendant l'adsorption des autres composants dudit mélange gazeux par le lit de matériau adsorbant contenu dans cette cuve pour obtenir comme produit un flux gazeux non perméable enrichi avec ledit composant choisi.

7. Dispositif selon la Revendication 6, ***caractérisé en ce qu'***il comprend additionnellement des moyens de canalisation pour amener un flux de perméat de ladite autre cellule (14) de diffusion gazeuse aux cuves (10, 12) d'adsorption.
